# FASCICULE DE BREVET EUROPEEN

(11) **EP 4 133 167 B1**
(45) Date de publication et mention de la délivrance du brevet: **19.03.2025**
(21) Numéro de dépôt: 21722526.7
(22) Date de dépôt: 07.04.2021
(51) Int. Cl.: F02C 6/08, F01D 17/10, F02K 3/075, F04D 27/02

(54) **GRILLE DE CONDUIT DE DÉCHARGE OPTIMISÉE ET VANNE DE DÉCHARGE OPTIMISÉE**
OPTIMIERTES ENTLADUNGSLEITUNGSGITTER UND OPTIMIERTES ENTLADUNGSVENTIL
OPTIMIZED DISCHARGE LINE GRID AND OPTIMIZED DISCHARGE VALVE

(30) Priorité: 10.04.2020 FR 2003663
(43) Date de publication de la demande: 15.02.2023
(73) Titulaire: SAFRAN AIRCRAFT ENGINES, 75015 Paris (FR); Ecole Centrale de Lyon, 69130 Ecully (FR); Centre national de la recherche scientifique, 75016 Paris (FR); Université Claude Bernard Lyon I, 69100 Villeurbanne (FR)
(72) Inventeur: LAFFAY, Paul, Clément, Guillaume, 77550 MOISSY-CRAMAYEL (FR); GEA AGUILERA, Fernando, 77550 MOISSY-CRAMAYEL (FR); REGNARD, Josselin, David, Florian, 77550 MOISSY-CRAMAYEL (FR); JACOB, Marc, Cornelius, 69005 LYON (FR); MOREAU, Stéphane, SHERBROOKE, Québec QC J1K1T1 (CA)
(74) Mandataire: Cabinet Beau de Loménie
(86) Numéro de dépôt international: PCT/FR2021/050614
(87) Numéro de publication internationale: WO 2021/205120

(56) Documents cités:
- WO-A1-03/046358
- FR-A1- 3 044 705
- US-A- 5 162 620
- US-A1- 2018 100 440
- PHONG VINCENT ET AL: "Normal incidence acoustic insertion loss of perforated plates with bias flow", THE JOURNAL OF THE ACOUSTICAL SOCIETY OF AMERICA, AMERICAN INSTITUTE OF PHYSICS FOR THE ACOUSTICAL SOCIETY OF AMERICA, NEW YORK, NY, US, vol. 138, no. 6, 1 December 2015 (2015-12-01), pages 3907 - 3921, XP012204061, ISSN: 0001-4966, [retrieved on 19010101], DOI: 10.1121/1.4937602

## Description

### Domaine Technique

L'invention concerne le domaine les bruits des systèmes de propulsion d'un aéronef, et plus particulièrement des bruits des vannes de décharges utilisées sur les systèmes propulsifs des aéronefs.

### Technique antérieure

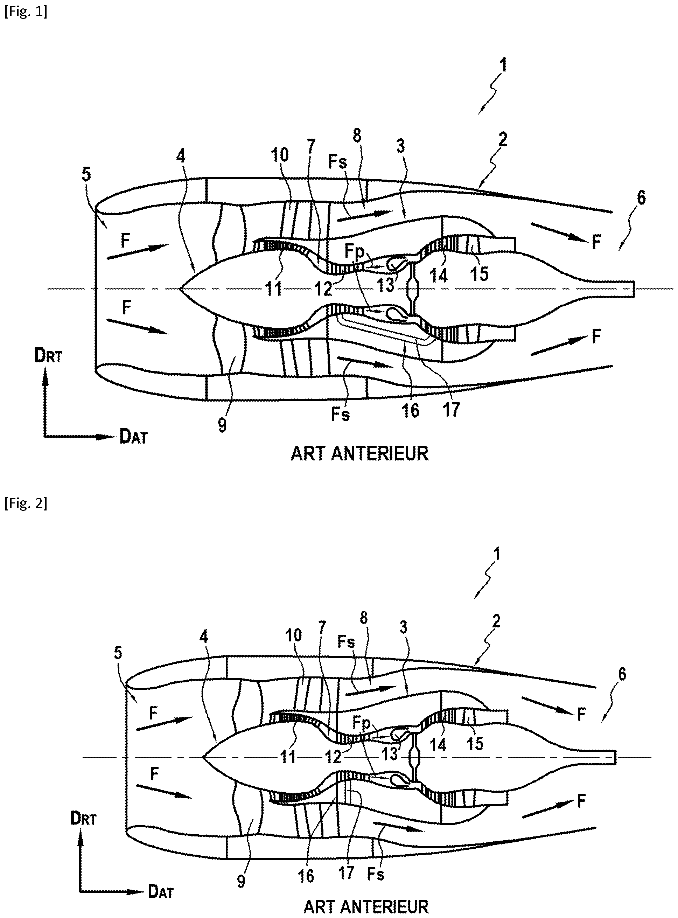

Dans la plupart des configurations, les systèmes propulsifs d'aéronefs, tels que des turbofan, turboprop, ou des open rotors, sont constitués comme le turboréacteur dont une vue en section dans un plan longitudinal du turboréacteur est illustrée sur la figure 1.

Le turboréacteur 1 comprend une nacelle 2, un carter intermédiaire 3 et un carter interne 4. La nacelle 2 et les deux carters 3 et 4 sont coaxiaux et définissent une direction axiale de turboréacteur D_{AT} et une direction radiale de turboréacteur D_{RT}. La nacelle 2 définit à une première extrémité un canal d'entrée 5 d'un écoulement de fluide et à une seconde extrémité, opposée à la première extrémité, un canal d'échappement 6 d'un écoulement de fluide. Le carter intermédiaire 3 et le carter interne 4 délimitent entre eux une veine primaire 7 d'écoulement de fluide. La nacelle 2 et le carter intermédiaire 3 délimitent entre eux une veine secondaire 8 d'écoulement de fluide. La veine primaire 7 et la veine secondaire 8 sont disposées selon une direction axiale de turboréacteur D_{AT} entre le canal d'entrée 5 et le canal d'échappement 6.

Le turboréacteur 1 comprend en outre une soufflante 9 configurée pour délivrer un flux d'air F comme écoulement fluidique, le flux d'air F étant divisé en sortie de la soufflante en un flux primaire Fp circulant dans la veine primaire 7 et en un flux secondaire Fs circulant dans la veine secondaire 8.

La veine secondaire 8 comprend un anneau de redresseurs 10, et la veine primaire 7 comprend un étage de compression basse pression 11, un étage de compression haute pression 12, une chambre de combustion 13, une turbine haute pression 14 et une turbine basse pression 15.

Les systèmes de propulsions d'un aéronef comprennent généralement des vannes de décharges 16 comme par exemple les vannes dénommées en anglais « Variable Bleed Valves » (VBV), « Transient Bleed Valves » (TBV) ou « Handling Bleed Valves » (HBV). Ces vannes 16 ont pour fonction de réguler le fonctionnement des turboréacteurs 2, en ajustant le débit d'air à l'entrée et/ou à la sortie du compresseur haute pression 12, pour augmenter la marge au pompage, à faible régime, ou lors des phases d'accélération ou de décélération. Le débit ainsi prélevé est évacué au travers d'un conduit 17, puis réintroduit dans la veine secondaire 8 acheminant le flux secondaire Fs, ou plus en aval dans le flux primaire Fp, suivant la stratégie employée.

Dans le cas où le débit d'air est réintroduit à l'aval de la veine primaire 7 acheminant le flux primaire Fp comme cela est illustré sur la figure 1 (cas courant pour la régulation des régimes transitoires), une pratique courante d'optimisation du système consiste en l'obstruction partielle du conduit par une grille multi-perforée ou un diaphragme. L'intérêt de cette optimisation est de générer une perte de charge permettant d'adapter le conditionnement thermodynamique de l'écoulement au milieu fluide dans lequel il sera réintroduit, dans des contraintes de masse et d'encombrement maitrisées. Le cas où la grille est positionnée dans le conduit est dénommé configuration en conduit.

Dans le cas illustré sur la figure 2, où le débit d'air est réintroduit dans la veine secondaire 8 acheminant le flux secondaire Fs, ou dans le cas où le débit d'air est réintroduit dans le milieu ambiant (cas courant pour la régulation des bas régimes), le conduit 17 du système de décharge est plus court et est, classiquement, dépourvu de diaphragme. Ceci étant, il est courant de positionner une grille à l'extrémité aval de ce conduit 17, afin de réduire les phénomènes aéro-acoustiques générés par l'éjection de gaz à haute vitesse. Le cas où la grille est positionnée à l'extrémité du conduit est dénommé configuration libre.

Dans les deux cas de figure illustrés sur les figures 1 et 2, un rayonnement acoustique significatif résulte de l'interaction entre la grille perforée et l'écoulement qui la traverse. Ce bruit, qui peut aller jusqu'à un niveau élevé sur l'échelle du bruit perçu effectif en décibels, connu en anglais sous l'abréviation EPNdB pour « Effective perceived noise in decibels », contribue au bruit avion, lors des transitions de régimes et à faible régime.

Il est connu du document WO 2015/110748 une stratégie de réintroduction de la charge prélevée, ainsi que l'utilisation d'un diaphragme micro-perforé pour minimiser les pénalités acoustiques associées aux phénomènes supersoniques générés en aval de ce diaphragme. Une grille de traitement acoustique selon l'art antérieur est également divulguée dans le document US2018/100440A1.

Parmi les sources de bruit identifiées lors du passage de l'écoulement à travers la grille, deux bruits sont particulièrement gênant : le bruit de mélange généré comme son nom l'indique par le mélange de l'écoulement dans les jets générés par la grille, et le bruit de choc qui peut apparaitre lorsque l'écoulement devient supersonique à la sortie de la grille.

### Exposé de l'invention

L'invention vise à proposer une grille améliorée permettant d'optimiser le mélange en aval de la grille et ainsi de minimiser l'intensité des phénomènes aéro-acoustiques générés par ce type de système de décharge et plus particulièrement de réduire le bruit de mélange et le bruit de choc, tout en assurant une surface perforée permettant d'assurer l'opérabilité du système d'air.

Dans un objet de l'invention selon la revendication 1, il est proposé une grille de traitement acoustique destinée à être montée à l'intérieur ou en sortie d'un conduit d'une vanne de décharge d'une turbomachine d'un aéronef destinée à acheminer un flux gazeux (F), la grille comprenant une plaque perforée et des orifices circulaires traversant la plaque perforée selon une première direction, les orifices ayant un diamètre et un centre géométrique.

Selon une caractéristique générale de l'invention, chaque orifice (230) est séparé d'un orifice adjacent par un espace dont la longueur (e) est égale au produit du diamètre (D) dudit orifice (230) avec un coefficient d'espacement dont la valeur est comprise entre 1,1 et 6.

La grille selon l'invention permet d'optimiser la répartition spatiale des perforations sur la surface de la grille, et ainsi de limiter l'interaction des jets issus de chaque perforation de la grille ce qui favorise une dissipation rapide des structures turbulentes générée en aval du système grille-écoulement, et permet ainsi de minimiser le bruit à basses fréquences, tout en assurant l'opérabilité de la vanne de décharge.

Le rayonnement acoustique est en effet principalement gouverné par la détente de l'écoulement à travers la grille, et est donc fortement lié à la géométrie de la grille. L'ajustement de l'espacement des orifices de la plaque en fonction des diamètres des orifices permet de décaler significativement le rayonnement acoustique vers les hautes fréquences et ainsi de le faire sortir partiellement de la gamme audible.

En outre, le rayonnement à hautes fréquences étant plus facile à réduire à l'aide de matériaux poreux par exemple, l'absorption acoustique du rayonnement acoustique est rendue plus aisée.

La gamme choisie pour le coefficient d'espacement permet d'assurer un bon compromis entre le décalage du rayonnement vers les hautes fréquences et les différentes contraintes de compacité liées à l'application.

Selon un premier aspect de la grille de traitement acoustique, le diamètre des orifices de la plaque perforée est compris de préférence entre 0,5 mm et 20 mm. Une telle gamme de diamètres pour les orifices de la plaque perforée permet de maximiser le décalage du rayonnement acoustique vers les hautes fréquences. Selon un deuxième aspect de la grille de traitement acoustique, la plaque perforée possède de préférence une épaisseur selon la première direction comprise entre 1 mm et 20 mm.

La gamme choisie pour l'épaisseur de la plaque perforée permet de supporter les efforts exercés et les températures régnants dans la turbomachine dans laquelle est montée la vanne de décharge comportant une telle grille de décharge.

Selon une caractéristique de l'invention, la plaque perforée comprend, par rapport au flux gazeux destiné à traverser la plaque perforée, une face amont destinée à recevoir le flux gazeux et une face aval, opposée à la face amont, à partir de laquelle le flux gazeux est destiné à s'échapper, la grille comprenant en outre une couche de matériau poreux disposée sur ladite face aval de la plaque perforée.

L'utilisation d'un matériau poreux sur la face aval de la grille permet d'atténuer les phénomènes de résonance acoustique dans le conduit de sortie, et ainsi de réduire les modes longitudinaux qui s'établissent.

Selon un quatrième aspect de la grille de traitement acoustique, la couche de matériau poreux disposée sur ladite face aval de la plaque perforée comporte une épaisseur selon la première direction comprise de préférence entre une première épaisseur égale à la moitié du diamètre d'un orifice autour duquel la couche de matériau poreux est disposée et une seconde épaisseur égale à vingt fois la longueur la plus grande de la plaque perforée mesurée dans un plan orthogonal à la première direction.

Ainsi, si la plaque perforée présente une forme de disque, son épaisseur est de préférence inférieure à vingt fois le diamètre de la plaque perforée.

Selon un cinquième aspect de la grille de traitement acoustique, la plaque perforée peut comprendre entre 2 et 500 orifices.

Selon un sixième aspect de la grille de traitement acoustique, les orifices peuvent être répartis uniformément sur la plaque perforée.

Selon un septième aspect de la grille de traitement acoustique, la plaque perforée peut comprendre au moins un premier orifice avec un premier diamètre et au moins un second orifice avec un second diamètre distinct du premier diamètre.

Dans un autre objet de l'invention, il est proposé une vanne de décharge pour turboréacteur d'aéronef selon la revendication 8 comprenant un conduit destiné à acheminer un flux gazeux principalement selon une première direction depuis au moins une entrée du conduit vers au moins une sortie du conduit, et au moins une grille de traitement acoustique telle que définie ci-dessus montée à l'intérieur du conduit ou sur une sortie du conduit. La première direction de la grille de traitement acoustique est confondue avec la première direction de la vanne de décharge.

Selon un premier aspect de la vanne de décharge, le conduit peut comprendre au moins une paroi munie d'un moyen de traitement acoustique et située en aval de la grille de décharge par rapport au sens d'écoulement du flux gazeux destiné à être acheminé dans le conduit.

L'application d'un moyen de traitement acoustique sur une ou plusieurs paroi(s) du conduit permet de réduire le rayonnement acoustique à hautes fréquences généré par la détente du flux gazeux au travers de la grille.

Selon un deuxième aspect de la vanne de décharge, le moyen de traitement acoustique de ladite au moins une paroi peut comprendre une couche de matériau poreux et/ou un panneau de traitement acoustique.

Le panneau de traitement acoustique peut être un panneau comprenant une structure en nid d'abeille. Le moyen de traitement acoustique peut être optimisé en fonction de la taille des orifices pour agir sur la plage de fréquences rayonnées par ladite grille.

Selon un troisième aspect de la vanne de décharge, la distance la plus courte entre le moyen de traitement acoustique et la grille est inférieure ou égale à une longueur égale à quarante fois la longueur la plus grande de la section du conduit, la section du conduit s'étendant orthogonalement à la première direction.

Selon un quatrième aspect de la vanne de décharge, la longueur selon la première direction du moyen de traitement acoustique est comprise de préférence entre une première longueur égale à la moitié de la longueur la plus grande de la section du conduit et une seconde longueur égale à cinquante fois la longueur la plus grande de la section du conduit, la section du conduit s'étendant orthogonalement à la première direction.

Selon un cinquième aspect de la vanne de décharge, l'épaisseur du moyen de traitement acoustique selon une direction orthogonale à la première direction est comprise de préférence entre une première épaisseur égale à la moitié du diamètre d'un orifice de la plaque perforée et une seconde épaisseur égale à vingt fois la longueur la plus grande de la section du conduit, la section du conduit s'étendant orthogonalement à la première direction.

Selon un sixième aspect de la vanne de décharge, le conduit peut comprendre au moins un tronçon dont le diamètre varie le long de la première direction.

Selon un septième aspect de la vanne de décharge, le conduit peut comprendre au moins un tronçon dont la forme géométrique de la section du conduit varie, la section du conduit s'étendant orthogonalement à la première direction.

Selon un huitième aspect de la vanne de décharge, le conduit peut comprendre au moins deux sorties, au moins une bifurcation, au moins un premier tronçon s'étendant entre l'entrée du conduit et une bifurcation, un deuxième tronçon s'étendant entre une bifurcation et une première sortie, un troisième tronçon s'étendant entre une bifurcation et une seconde sortie, au moins une desdites au moins une grille étant montée dans un des premier, deuxième ou troisième tronçon, ou sur une des première ou seconde sorties.

L'utilisation d'un conduit à section variable et/ou d'une forme géométrique non circulaire et/ou de bifurcations permet de minimiser les éventuelles zones de recirculation ou de décrochage des conduits (source de bruit supplémentaire) et d'adapter le système à l'encombrement disponible sur l'architecture du moteur. Selon un neuvième aspect de la vanne de décharge, ladite au moins une grille et/ou ledit au moins un moyen de traitement acoustique peuvent être en matériau céramique.

L'avantage d'utiliser un matériau céramique est de réduire le poids de la grille en assurant la tenue de la pièce dans l'environnement moteur (haute températures, etc.). En outre, les traitements acoustiques construits en matériau composite à matrice céramique (CMC) ont des bonnes propriétés à haute température.

Dans un autre objet de l'invention, il est proposé un turboréacteur selon la revendication 18 comprenant une nacelle, un carter intermédiaire et un carter interne coaxiaux, et une vanne de décharge telle que définie ci-dessus, le carter intermédiaire et le carter interne délimitant entre eux une veine primaire d'écoulement de fluide, la nacelle et le carter intermédiaire délimitant entre eux une veine secondaire d'écoulement de fluide, et la vanne de décharge étant montée entre la veine primaire et la veine secondaire et configurée pour prélever une portion de l'air dans la veine primaire et la délivrer dans la veine secondaire.

Dans un autre objet de l'invention, il est proposé un turboréacteur selon la revendication 19 comprenant une nacelle, un carter intermédiaire et un carter interne coaxiaux, et une vanne de décharge telle que définie ci-dessus, le carter intermédiaire et le carter interne délimitant entre eux une veine primaire d'écoulement de fluide dans laquelle est montée une chambre de combustion, la nacelle et le carter intermédiaire délimitant entre eux une veine secondaire d'écoulement de fluide, et la vanne de décharge étant configurée pour prélever une portion de l'air dans la veine primaire en amont de la chambre de combustion et la délivrer dans la veine primaire en aval de la chambre de combustion.

### Brève description des dessins

[Fig. 1] La figure 1, déjà décrite, présente une vue en section dans un plan longitudinal d'un turboréacteur selon l'état de la technique avec une vanne de décharge à réinjection dans le flux primaire.
[Fig. 2] La figure 2, déjà décrite, présente une vue en section dans un plan longitudinal d'un turboréacteur selon l'état de la technique avec une vanne de décharge à réinjection dans le flux primaire.
[Fig. 3] La figures 3 présente schématiquement une vue en coupe d'une vanne de décharge dotée d'une grille de traitement acoustique selon un premier mode de réalisation de la vanne de décharge.
[Fig. 4] La figure 4 présente une vue de face de la grille de traitement acoustique de la figure 3.
[Fig. 5] La figure 5 présente schématiquement une vue en section d'une vanne de décharge selon un deuxième mode de réalisation de la vanne de décharge.
[Fig. 6] La figure 6 présente une vue de face d'une plaque perforée de la grille de traitement acoustique selon un troisième mode de réalisation de la grille de traitement acoustique.
[Fig. 7] La figure 7 présente une vue de face d'une plaque perforée de la grille de traitement acoustique selon un quatrième mode de réalisation de la grille de traitement acoustique.
[Fig. 8] La figure 8 présente une vue de face d'une plaque perforée de la grille de traitement acoustique selon un cinquième mode de réalisation de la grille de traitement acoustique.
[Fig.9] La figure 9 présente une vue de face d'une plaque perforée de la grille de traitement acoustique selon un sixième mode de réalisation de la grille de traitement acoustique.
[Fig.10] La figure 10 présente une vue de face d'une plaque perforée de la grille de traitement acoustique selon un septième mode de réalisation de la grille de traitement acoustique.
[Fig.11] La figure 11 présente une vue de face d'une plaque perforée de la grille de traitement acoustique selon un huitième mode de réalisation de la grille de traitement acoustique.
[Fig.12] La figure 12 présente schématiquement une vue d'une vanne de décharge selon un troisième mode de réalisation de l'invention de la vanne de décharge.
[Fig.13] La figure 13 présente schématiquement une vue d'une vanne de décharge selon un quatrième mode de réalisation de la vanne de décharge.

### Description des modes de réalisation

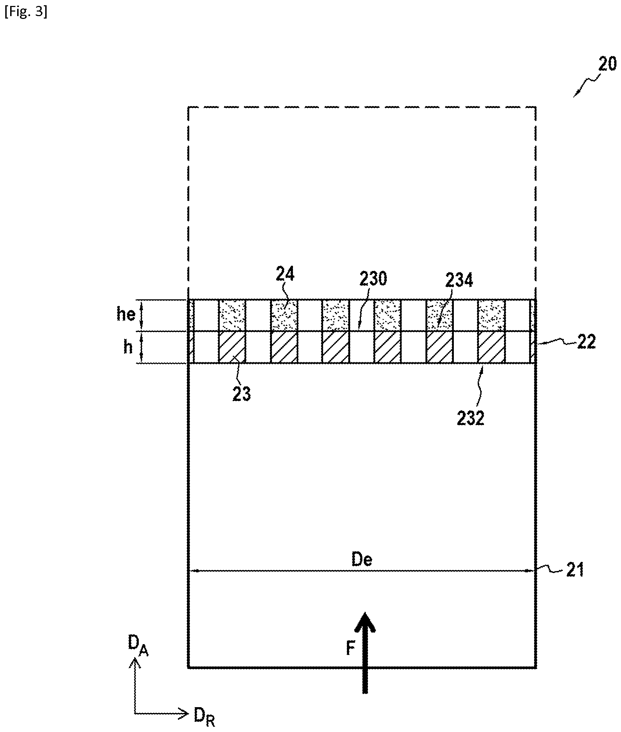

Sur la figure 3 est illustrée schématiquement une vue en coupe d'une vanne de décharge 20 dotée d'une grille de traitement acoustique 22 selon un mode de réalisation de l'invention.

La vanne de décharge 20 pour turboréacteur d'aéronef selon le premier mode de réalisation de l'invention comprend un conduit 21 cylindrique à base circulaire d'un premier diamètre De et destiné à acheminer un flux gazeux F, et une grille 22 comprenant une plaque perforée 23 également cylindrique et comprenant des orifices 230.

Le conduit 21 définit une direction axiale D_{A} parallèle à l'axe de symétrie cylindrique du conduit 21 et une direction radiale D_{R} orthogonale à la direction axiale D_{A}. La vue en coupe de la vanne de décharge 20 de la figure 3 est réalisé dans un plan comprenant la direction axiale D_{A} et la direction radiale D_{R}.

La plaque perforée 23 comprend une face amont 232 recevant le flux gazeux F et une face aval 234 opposée à la face amont 232 par laquelle le flux gazeux F s'échappe après avoir traversé la plaque perforée 23.

Le conduit 21 n'est obstruée que partiellement par la grille 22 dans le sens que le flux F peut s'écouler par les orifices 230 de la plaque perforée 23 formant la grille 22, et uniquement par ces orifices 23.

La plaque perforée 23 de la grille 22 peut être réalisée en un matériau métallique ou en matériau à matrice céramique ou un autre matériau résistant aux conditions thermiques notamment lorsque la vanne de décharge 20 est en fonctionnement.

La grille 22 peut être montée à une extrémité de sortie du conduit 21 ou bien à l'intérieur du conduit 21 comme indiqué par la portion en pointillés du conduit 21.

En outre, comme indiqué sur la figure 3, la grille 22 comprend en outre une couche de matériau poreux 24 disposée sur la face aval 234 sans recouvrir les orifices 230. La plaque 23 et la couche de matériau poreux 24 forment ainsi des canaux à partir des orifices 230 de la plaque perforée 23.

La plaque perforée 23 comprend une épaisseur h comprise entre 1 mm et 20 mm, et la couche de matériau poreux 24 comprend une épaisseur he.

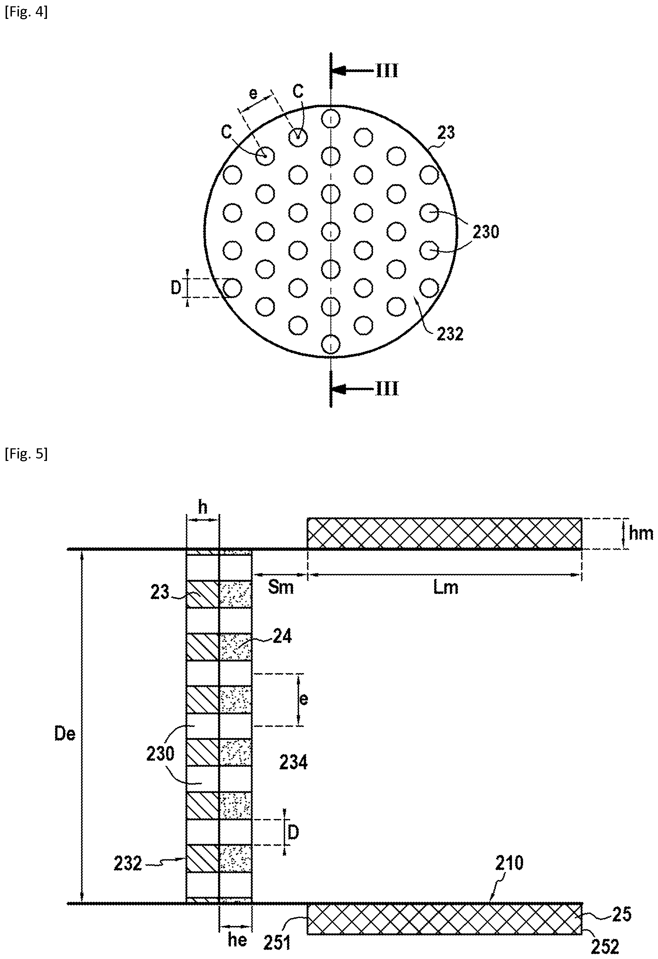

Sur la figure 4 est illustrée une vue de face de la plaque perforée 23 de la figure 3 selon un premier mode de réalisation. La plaque perforée 23 s'étend dans un plan radial comprenant la direction radiale D_{R} et orthogonal à la direction axiale D_{A}.

Dans une variante, la plaque perforée 23 peut être bombée selon la direction axiale D_{A}. Dans une autre variante, la plaque 23 peut être disposée à l'intérieur du conduit de manière à former un angle compris entre 0 et 10° avec un plan orthogonal à la direction axiale D_{A}, les orifices 230 s'étendant selon la direction axiale D_{A} ce qui permet d'allonger légèrement la longueur du canal formé par l'orifice 230 avec une épaisseur h de la plaque 23 réduite.

Comme illustré sur la figure 4, la plaque perforée 23 comprend, dans cet exemple, 37 orifices 230 ayant chacun la forme d'un cercle avec un second diamètre D compris entre 0,5 mm et 20 mm et un centre géométrique C.

L'épaisseur he de la couche de matériau poreux 24 est comprise entre un demi second diamètre D d'orifice 230 et vingt fois le premier diamètre De du conduit 21, qui correspond au diamètre de la plaque perforée 23 lorsque la grille est montée à l'intérieur du conduit 21.

Chaque orifice 230 est séparé des autres orifices adjacents par une longueur e comprise entre 1,1 fois et 6 fois le second diamètre D de l'orifice. Par orifices adjacents, on entend deux orifices n'ayant pas d'autres orifices entre eux. La longueur e séparant les deux orifices est mesurée du centre du premier orifice au centre du second orifice.

Sur la figure 5 est illustrée une vue en coupe d'une vanne de décharge 20 selon un deuxième mode de réalisation de l'invention.

Le deuxième mode de réalisation diffère du premier mode de réalisation illustré sur la figure 3 en ce que le conduit 21 comprend une portion de conduit 210 située en aval de la grille 22 par rapport au sens du flux gazeux F, cette portion de conduit 210 étant dotée d'un panneau de traitement acoustique 25. Dans une variante, le panneau de traitement acoustique pourrait être remplacé par une couche de matériau poreux.

Le panneau de traitement acoustique 25 comprend un cœur ayant une structure en nid d'abeilles formant des cavités résonantes d'absorption acoustique. Les cavités sont accordées sur une plage de fréquences à traiter.

Le panneau de traitement acoustique 25 s'étend le long de la paroi de la portion de conduit 210, c'est-à-dire selon la direction axiale D_{A}, sur une longueur Lm entre une extrémité amont 251 et une extrémité aval 252 par rapport au sens du flux gazeux F. La longueur Lm est comprise entre une première longueur égale à la moitié du premier diamètre De du conduit 21 et une seconde longueur égale à cinquante fois le premier diamètre De du conduit 21.

L'extrémité amont 251 du panneau de traitement acoustique 25 est séparée de la grille 22 d'une longueur Sm selon la direction axiale D_{A} inférieure ou égale à quarante fois le premier diamètre De du conduit 21.

Le panneau de traitement acoustique 25 comprend en outre une épaisseur hm selon la direction radiale D_{R} comprise entre une première épaisseur égale à la moitié du second diamètre D d'un orifice 230 de la plaque perforée 23 et une seconde épaisseur égale à vingt fois le premier diamètre De du conduit 21.

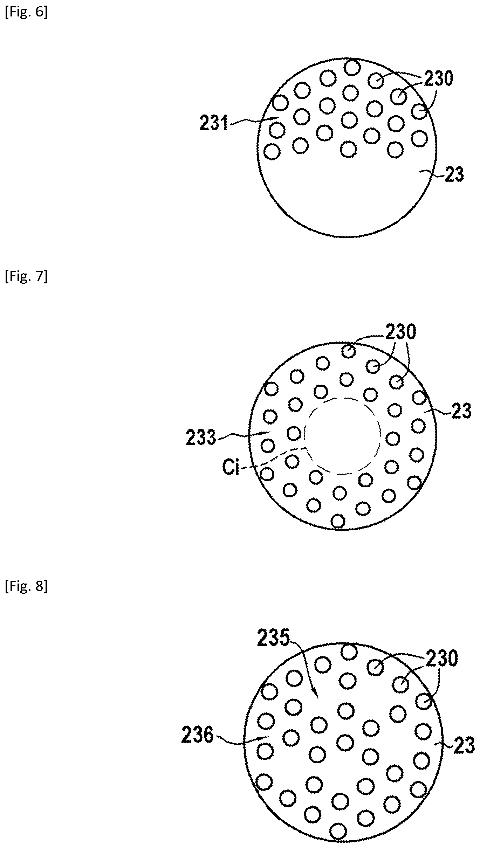

Sur la figure 6 est présentée une vue de face d'une plaque perforée 23 de la grille de traitement acoustique 22 selon un troisième mode de réalisation de la grille de traitement acoustique.

Dans ce troisième mode de réalisation, la plaque perforée 23 comprend 22 orifices 230 répartis sur une unique moitié 231 du disque formé par la plaque perforée 23.

Sur la figure 7 est présentée une vue de face d'une plaque perforée 23 de la grille de traitement acoustique 22 selon un quatrième mode de réalisation de la grille de traitement acoustique.

Dans ce quatrième mode de réalisation, la plaque perforée 23 comprend 30 orifices 230 répartis sur une couronne 233 formée entre le périmètre extérieur de la plaque perforée 23 circulaire et un cercle interne Ci de diamètre plus petit que celui du périmètre extérieur.

Sur la figure 8 est présentée une vue de face d'une plaque perforée 23 de la grille de traitement acoustique 22 selon un cinquième mode de réalisation de la grille de traitement acoustique.

Dans ce cinquième mode de réalisation, la plaque perforée 23 comprend 32 orifices 230 répartis sur la surface perforée pour former des premières zones 235 dépourvues d'orifices et des secondes zones 236 pourvues d'orifices 230.

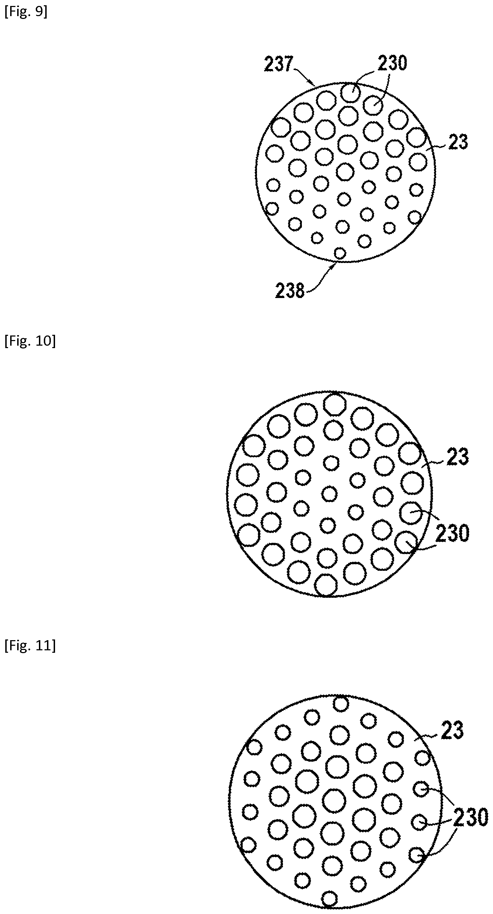

Sur la figure 9 est présentée une vue de face d'une plaque perforée 23 de la grille de traitement acoustique 22 selon un sixième mode de réalisation de la grille de traitement acoustique.

Dans ce sixième mode de réalisation, la plaque perforée 23 comprend 36 orifices 230 répartis sur toute la surface de la plaque perforée 23 comme le premier mode de réalisation illustré sur la figure 4. Le sixième mode de réalisation diffère du premier mode de réalisation illustré sur la figure 4 en ce que les orifices 230 comprennent des orifices de différents diamètres, le diamètre des orifices 230 augmentant depuis une première extrémité 237 de la plaque perforée 23 circulaire à une seconde extrémité 238 de la plaque perforée 23 circulaire.

Sur la figure 10 est présentée une vue de face d'une plaque perforée 23 de la grille de traitement acoustique 22 selon un septième mode de réalisation de la grille de traitement acoustique.

Le septième mode de réalisation diffère du sixième mode de réalisation illustré sur la figure 9 en ce que le diamètre des orifices 230 croit en s'éloignant du centre de la plaque perforée 23 circulaire.

Sur la figure 11 est présentée une vue de face d'une plaque perforée 23 de la grille de traitement acoustique 22 selon un huitième mode de réalisation de la grille de traitement acoustique.

Le huitième mode de réalisation diffère du sixième mode de réalisation illustré sur la figure 9 en ce que le diamètre des orifices 230 croit en se rapprochant du centre de la plaque perforée 23 circulaire.

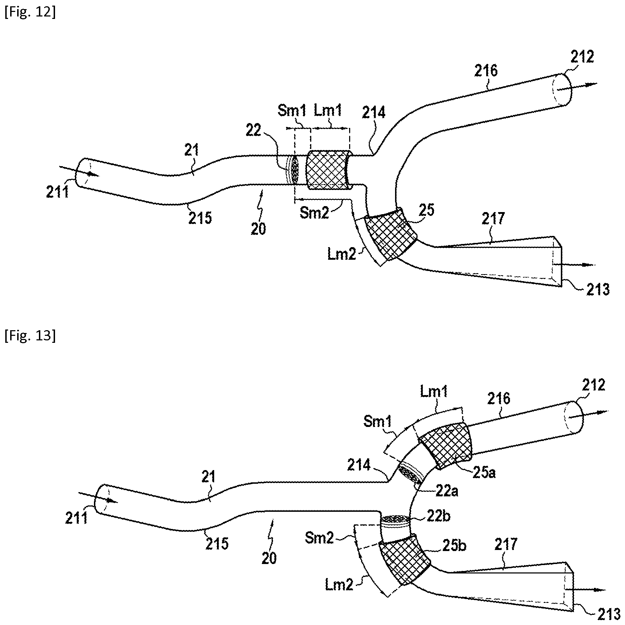

Sur la figure 12 est illustrée schématiquement une vue d'une vanne de décharge selon un troisième mode de réalisation de la vanne de décharge.

Dans le troisième mode de réalisation de la vanne de décharge 20, le conduit 21 comprend une unique entrée 211, une première sortie 212, une seconde sortie 213, une bifurcation 214, un premier tronçon 215 s'étendant entre l'entrée 211 du conduit 21 et la bifurcation 214, un deuxième tronçon 216 s'étendant entre la bifurcation 214 et la première sortie 212, et un troisième tronçon 217 s'étendant entre la bifurcation 214 et la seconde sortie 213.

Dans le troisième mode de réalisation, la vanne de décharge 20 comprend une grille 22 montée dans le premier tronçon 215, ainsi qu'un premier panneau de traitement acoustique 25a monté sur le premier tronçon 215, entre la grille 22 et la bifurcation 214, et un second panneau de traitement acoustique 25b monté le troisième tronçon 217 entre la bifurcation 214 et la seconde sortie 213.

Le premier panneau de traitement acoustique 25a s'étend sur une première longueur Lm1 du premier tronçon 215 et est séparé de la grille 22 par un premier espace de longueur Sm1, et le second panneau de traitement acoustique 25b s'étend sur une seconde longueur Lm2 du troisième tronçon 217 et est séparé de la grille 22 par un second espace de longueur Sm2.

Sur la figure 13 est illustrée schématiquement une vue d'une vanne de décharge selon un quatrième mode de réalisation de la vanne de décharge.

Le quatrième mode de réalisation de la vanne de décharge 20 diffère du troisième mode de réalisation illustré sur la figure 12 en ce qu'il comprend deux grilles 22a et 22b et deux panneaux de traitement acoustiques 25a et 25b, la première grille 22a et le premier panneau de traitement acoustique étant montés sur le deuxième tronçon 216 du conduit 21 et la seconde grille 22b et le second panneau de traitement acoustique étant montés sur le troisième tronçon 217 du conduit 21.

Le premier panneau de traitement acoustique 25a s'étend sur une première longueur Lm1 du deuxième tronçon 216 et est séparé de la première grille 22a par un premier espace de longueur Sm1, et le second panneau de traitement acoustique 25b s'étend sur une seconde longueur Lm2 du troisième tronçon 217 et est séparé de la seconde grille 22b par un second espace de longueur Sm2.

La grille et la vanne de décharge selon l'invention permettent d'optimiser le mélange en aval de la grille et ainsi de minimiser l'intensité des phénomènes aéro-acoustiques générés par ce type de système de décharge et plus particulièrement de réduire le bruit de mélange et le bruit de choc, tout en assurant une surface perforée permettant d'assurer l'opérabilité du système d'air.

## Revendications

1. Grille (22) de traitement acoustique destinée à être montée à l'intérieur ou en sortie d'un conduit (21) d'une vanne de décharge (20) d'une turbomachine (1) d'un aéronef destinée à acheminer un flux gazeux (F), la grille (22) comprenant une plaque perforée (23) et des orifices (230) circulaires traversant la plaque perforée (23) selon une première direction (D_{A}), les orifices (230) ayant un diamètre (D) et un centre (C) géométrique, la plaque perforée (23) comprenant, par rapport au flux gazeux (F) destiné à traverser la plaque perforée (23), une face amont (232) destinée à recevoir le flux gazeux (F) et une face aval (234), opposée à la face amont (232), à partir de laquelle le flux gazeux (F) est destiné à s'échapper, la grille étant **caractérisée en ce que** chaque orifice (230) est séparé d'un orifice adjacent par un espace dont la longueur (e) est égale au produit du diamètre (D) dudit orifice (230) avec un coefficient d'espacement dont la valeur est comprise entre 1,1 et 6 pour minimiser le bruit à basses fréquences tout en assurant l'opérabilité de la vanne de décharge (20), la longueur (e) séparant les deux orifices (230) étant mesurée entre les centres (C) géométriques des deux orifices (230), et la grille (22) comprenant en outre une couche de matériau poreux (24) disposée sur ladite face aval (234) de la plaque perforée (23) sans recouvrir les orifices (230), la plaque (23) et la couche de matériau poreux (24) formant des canaux.

2. Grille (22) selon la revendication 1, dans laquelle le diamètre (D) des orifices (230) de la plaque perforée (23) est compris entre 0,5 mm et 20 mm.

3. Grille (22) selon l'une des revendications 1 ou 2, dans laquelle la plaque perforée (23) possède une épaisseur (h) selon la première direction (D_{A}) comprise entre 1 mm et 20 mm.

4. Grille (22) selon l'une des revendications 1 à 3, dans laquelle la couche de matériau poreux (24) disposée sur ladite face aval (234) de la plaque perforée (23) comporte une épaisseur (he) selon la première direction (D_{A}) comprise entre une première épaisseur égale à la moitié du diamètre (D) d'un orifice (230) autour duquel la couche de matériau poreux (24) est disposé et une seconde épaisseur égale à vingt fois la longueur la plus grande de la plaque perforée (23) mesurée dans un plan orthogonal à la première direction (D_{A}).

5. Grille (22) selon l'une des revendications 1 à 4, dans laquelle la plaque perforée (23) comprend entre 2 et 500 orifices (230).

6. Grille (22) selon l'une des revendications 1 à 5, dans laquelle les orifices (230) sont répartis uniformément sur la plaque perforée (23).

7. Grille (22) selon l'une des revendications 1 à 6, dans laquelle la plaque perforée (23) comprend au moins un premier orifice avec un premier diamètre et au moins un second orifice avec un second diamètre distinct du premier diamètre.

8. Vanne de décharge (20) pour turboréacteur (1) d'aéronef comprenant un conduit (21) destiné à acheminer un flux gazeux (F) principalement selon une première direction (D_{A}) depuis au moins une entrée (211) du conduit (21) vers au moins une sortie (212, 213) du conduit (21), et au moins une grille (22) selon l'une des revendications 1 à 7 montée à l'intérieur du conduit (21) ou sur une sortie (212, 213) du conduit (21).

9. Vanne de décharge (20) selon la revendication 8, dans laquelle le conduit (21) comprend au moins une paroi munie d'un moyen de traitement acoustique (25) et située en aval de la grille de décharge (22) par rapport au sens d'écoulement du flux gazeux (F) destiné à être acheminé dans le conduit (21).

10. Vanne de décharge (20) selon la revendication 9, dans laquelle le moyen de traitement acoustique (25) de ladite au moins une paroi comprend une couche de matériau poreux et/ou un panneau de traitement acoustique.

11. Vanne de décharge (20) selon l'une des revendications 9 ou 10, dans laquelle la distance (Sm) la plus courte entre le moyen de traitement acoustique (25) et la grille (22) est inférieure ou égale à une longueur égale à quarante fois la longueur la plus grande de la section du conduit (21), la section du conduit s'étendant orthogonalement à la première direction (D_{A}),

12. Vanne de décharge (20) selon l'une des revendications 9 à 11, dans laquelle la longueur (Lm) selon la première direction (D_{A}) du moyen de traitement acoustique (25) est comprise entre une première longueur égale à la moitié de la longueur la plus grande de la section du conduit (21) et une seconde longueur égale à cinquante fois la longueur la plus grande de la section du conduit (21), la section du conduit s'étendant orthogonalement à la première direction (D_{A}).

13. Vanne de décharge (20) selon l'une des revendications 9 à 12, dans laquelle l'épaisseur (hm) selon une direction (D_{R}) orthogonale à la première direction (D_{A}) du moyen de traitement acoustique (25) est comprise entre une première épaisseur égale à la moitié du diamètre d'un orifice (D) de la plaque perforée (23) et une seconde épaisseur égale à vingt fois la longueur la plus grande de la section du conduit (21), la section du conduit s'étendant orthogonalement à la première direction (D_{A}),

14. Vanne de décharge (20) selon l'une des revendications 8 à 13, dans laquelle le conduit (21) comprend au moins un tronçon dont le diamètre varie le long de la première direction (D_{A}).

15. Vanne de décharge (20) selon l'une des revendications 8 à 14, dans laquelle le conduit (21) comprend au moins un tronçon (215, 216, 217) dont la forme géométrique de la section du conduit (21) varie, la section du conduit s'étendant orthogonalement à la première direction (D_{A}),

16. Vanne de décharge (20) selon l'une des revendications 8 à 15, dans laquelle le conduit (21) comprend au moins deux sorties (212, 213), au moins une bifurcation (214), au moins un premier tronçon (215) s'étendant entre l'entrée (211) du conduit (21) et une bifurcation (214), un deuxième tronçon (216) s'étendant entre une bifurcation (214) et une première sortie (212), un troisième tronçon (217) s'étendant entre une bifurcation (214) et une seconde sortie (213), au moins une desdites au moins une grille (22) étant montée dans un des premier, deuxième ou troisième tronçon (215, 216, 217), ou sur une des première ou seconde sorties (212, 213).

17. Vanne de décharge (20) selon l'une des revendications 8 à 16, dans laquelle ladite au moins une grille (22) et/ou ledit au moins un moyen de traitement acoustique (25) sont en matériau céramique.

18. Turboréacteur (1) comprenant une nacelle (2), un carter intermédiaire (3) et un carter interne (4) coaxiaux, et une vanne de décharge (20) selon l'une des revendications 8 à 17, le carter intermédiaire (3) et le carter interne (4) délimitant entre eux une veine primaire (7) d'écoulement de fluide, la nacelle (2) et le carter intermédiaire (3) délimitant entre eux une veine secondaire (8) d'écoulement de fluide, et la vanne de décharge (20) étant montée entre la veine primaire (7) et la veine secondaire (8) et configurée pour prélever une portion de l'air dans la veine primaire (7) et la délivrer dans la veine secondaire (8).

19. Turboréacteur (1) comprenant une nacelle (2), un carter intermédiaire (3) et un carter interne (4) coaxiaux, et une vanne de décharge (20) selon l'une des revendications 8 à 17, le carter intermédiaire (3) et le carter interne (4) délimitant entre eux une veine primaire (7) d'écoulement de fluide dans laquelle est montée une chambre de combustion (13), la nacelle (2) et le carter intermédiaire (3) délimitant entre eux une veine secondaire (8) d'écoulement de fluide, et la vanne de décharge (20) étant configurée pour prélever une portion de l'air dans la veine primaire (7) en amont de la chambre de combustion (13) et la délivrer dans la veine primaire (7) en aval de la chambre de combustion (13).

## Patentansprüche

1. Akustisches Behandlungsgitter (22), das dazu bestimmt ist, im Inneren oder am Auslass einer Leitung (21) eines Entladungsventils (20) einer Turbomaschine (1) eines Luftfahrzeugs montiert zu sein, die dazu bestimmt ist, eine Gasströmung (F) zu befördern, wobei das Gitter (22) eine perforierte Platte (23) und kreisförmige Öffnungen (230) umfasst, welche die perforierte Platte (23) entlang einer ersten Richtung (D_{A}) durchlaufen, wobei die Öffnungen (230) einen Durchmesser (D) und eine geometrische Mitte (C) aufweisen, wobei die perforierte Platte (23) in Bezug auf die Gasströmung (F), die dazu bestimmt ist, die perforierte Platte (23) zu durchlaufen, eine stromaufwärtige Fläche (232), die dazu bestimmt ist, die Gasströmung (F) aufzunehmen, und eine stromabwärtige Fläche (234) gegenüber der stromaufwärtigen Fläche (232) umfasst, von der die Gasströmung (F) dazu bestimmt ist, auszutreten, wobei das Gitter **dadurch gekennzeichnet ist, dass** jede Öffnung (230) von einer benachbarten Öffnung durch einen Raum getrennt ist, dessen Länge (e) gleich dem Produkt des Durchmessers (D) der Öffnung (230) mit einem Abstandskoeffizienten ist, dessen Wert zwischen 1,1 und 6 liegt, um niederfrequente Geräusche zu minimieren und gleichzeitig die Funktionsfähigkeit des Entladungsventils (20) sicherzustellen, wobei die Länge (e), welche die zwei Öffnungen (230) trennt, zwischen den geometrischen Mitten (C) der zwei Öffnungen (230) gemessen wird, und das Gitter (22) ferner eine poröse Materialschicht (24) umfasst, die auf der stromabwärtigen Fläche (234) der perforierten Platte (23) angeordnet ist, ohne die Öffnungen (230) zu bedecken, wobei die Platte (23) und die poröse Materialschicht (24) Kanäle bilden.

2. Gitter (22) nach Anspruch 1, wobei der Durchmesser (D) der Öffnungen (230) der perforierten Platte (23) zwischen 0,5 mm und 20 mm liegt.

3. Gitter (22) nach einem der Ansprüche 1 oder 2, wobei die perforierte Platte (23) eine Dicke (h) entlang der ersten Richtung (D_{A}) besitzt, die zwischen 1 mm und 20 mm liegt.

4. Gitter (22) nach einem der Ansprüche 1 bis 3, wobei die poröse Materialschicht (24), die auf der stromabwärtigen Fläche (234) der perforierten Platte (23) angeordnet ist, eine Dicke (he) entlang der ersten Richtung (D_{A}) beinhaltet, die zwischen einer ersten Dicke gleich der Hälfte des Durchmessers (D) einer Öffnung (230), um welche die poröse Materialschicht (24) angeordnet ist, und einer zweiten Dicke gleich dem Zwanzigfachen der größten Länge der perforierten Platte (23) gemessen in einer orthogonalen Ebene zu der ersten Richtung (D_{A}) liegt.

5. Gitter (22) nach einem der Ansprüche 1 bis 4, wobei die perforierte Platte (23) zwischen 2 und 500 Öffnungen (230) umfasst.

6. Gitter (22) nach einem der Ansprüche 1 bis 5, wobei die Öffnungen (230) gleichmäßig auf der perforierten Platte (23) verteilt sind.

7. Gitter (22) nach einem der Ansprüche 1 bis 6, wobei die perforierte Platte (23) mindestens eine erste Öffnung mit einem ersten Durchmesser und mindestens eine zweite Öffnung mit einem zweiten Durchmesser, der sich von dem ersten Durchmesser unterscheidet, umfasst.

8. Entladungsventil (20) eines Turboreaktors (1) eines Luftfahrzeugs, umfassend eine Leitung (21), die dazu bestimmt ist, eine Gasströmung (F) im Wesentlichen entlang einer ersten Richtung (D_{A}) von mindestens einem Eingang (211) der Leitung (21) zu mindestens einem Ausgang (212, 213) der Leitung (21) zu befördern, und mindestens ein Gitter (22) nach einem der Ansprüche 1 bis 7, das im Inneren der Leitung (21) oder an einem Ausgang (212, 213) der Leitung (21) montiert ist.

9. Entladungsventil (20) nach Anspruch 8, wobei die Leitung (21) mindestens eine Wand umfasst, die mit einem akustischen Behandlungsmittel (25) versehen ist und sich stromabwärts des Entladungsgitters (22) in Bezug auf die Flussrichtung der Gasströmung (F) befindet, die dazu bestimmt ist, in der Leitung (21) befördert zu werden.

10. Entladungsventil (20) nach Anspruch 9, wobei das akustische Behandlungsmittel (25) der mindestens einen Wand eine poröse Materialschicht und/oder eine akustische Behandlungsplatte umfasst.

11. Entladungsventil (20) nach einem der Ansprüche 9 oder 10, wobei der kürzeste Abstand (Sm) zwischen dem akustischen Behandlungsmittel (25) und dem Gitter (22) kleiner als eine oder gleich einer Länge gleich dem Vierzigfachen der größten Länge des Abschnittes der Leitung (21) ist, wobei sich der Abschnitt der Leitung orthogonal zu der ersten Richtung (D_{A}) erstreckt.

12. Entladungsventil (20) nach einem der Ansprüche 9 bis 11, wobei die Länge (Lm) entlang der ersten Richtung (D_{A}) des akustischen Behandlungsmittels (25) zwischen einer ersten Länge gleich der Hälfte der größten Länge des Abschnittes der Leitung (21) und einer zweiten Länge gleich dem Fünfzigfachen der größten Länge des Abschnittes der Leitung (21) liegt, wobei sich der Abschnitt der Leitung orthogonal zu der ersten Richtung (D_{A}) erstreckt.

13. Entladungsventil (20) nach einem der Ansprüche 9 bis 12, wobei die Dicke (hm) entlang einer Richtung (D_{R}) orthogonal zu der ersten Richtung (D_{A}) des akustischen Behandlungsmittels (25) zwischen einer ersten Dicke gleich der Hälfte des Durchmessers einer Öffnung (D) der perforierten Platte (23) und einer zweiten Dicke gleich dem Zwanzigfachen der größten Länge des Abschnittes der Leitung (21) liegt, wobei sich der Abschnitt der Leitung orthogonal zu der ersten Richtung (D_{A}) erstreckt.

14. Entladungsventil (20) nach einem der Ansprüche 8 bis 13, wobei die Leitung (21) mindestens ein Stück umfasst, dessen Durchmesser entlang der ersten Richtung (D_{A}) variiert.

15. Entladungsventil (20) nach einem der Ansprüche 8 bis 14, wobei die Leitung (21) mindestens ein Stück (215, 216, 217) umfasst, dessen geometrische Form des Abschnittes der Leitung (21) variiert, wobei sich der Abschnitt der Leitung orthogonal zu der ersten Richtung (D_{A}) erstreckt.

16. Entladungsventil (20) nach einem der Ansprüche 8 bis 15, wobei die Leitung (21) mindestens zwei Ausgänge (212, 213), mindestens eine Abzweigung (214), mindestens ein erstes Stück (215), das sich zwischen dem Eingang (211) der Leitung (21) und einer Abzweigung (214) erstreckt, ein zweites Stück (216), das sich zwischen einer Abzweigung (214) und einem ersten Ausgang (212) erstreckt, ein drittes Stück (217), das sich zwischen einer Abzweigung (214) und einem zweiten Ausgang (213) erstreckt, umfasst, wobei mindestens eines von dem mindestens einen Gitter (22) in einem von dem ersten, zweiten oder dritten Stück (215, 216, 217) oder an einem von dem ersten oder zweiten Ausgang (212, 213) montiert ist.

17. Entladungsventil (20) nach einem der Ansprüche 8 bis 16, wobei das mindestens eine Gitter (22) und/oder das mindestens eine akustische Behandlungsmittel (25) aus Keramikmaterial sind.

18. Turboreaktor (1), umfassend eine Gondel (2), ein Zwischengehäuse (3) und ein Innengehäuse (4), die koaxial sind, und ein Entladungsventil (20) nach einem der Ansprüche 8 bis 17, wobei das Zwischengehäuse (3) und das Innengehäuse (4) zwischen sich eine primäre Ader (7) für die Strömung von Fluid begrenzen, die Gondel (2) und das Zwischengehäuse (3) zwischen sich eine sekundäre Ader (8) für die Strömung von Fluid begrenzen und das Entladungsventil (20) zwischen der primären Ader (7) und der sekundären Ader (8) montiert und dazu ausgestaltet ist, einen Teil der Luft in der primären Ader (7) zu entnehmen und sie in die sekundäre Ader (8) zu liefern.

19. Turboreaktor (1), umfassend eine Gondel (2), ein Zwischengehäuse (3) und ein Innengehäuse (4), die koaxial sind, und ein Entladungsventil (20) nach einem der Ansprüche 8 bis 17, wobei das Zwischengehäuse (3) und das Innengehäuse (4) zwischen sich eine primäre Ader (7) für die Strömung von Fluid begrenzen, in der eine Brennkammer (13) montiert ist, die Gondel (2) und das Zwischengehäuse (3) zwischen sich eine sekundäre Ader (8) für die Strömung von Fluid begrenzen und das Entladungsventil (20) dazu ausgestaltet ist, einen Teil der Luft in der primären Ader (7) stromaufwärts der Brennkammer (13) zu entnehmen und sie in die primäre Ader (7) stromabwärts der Brennkammer (13) zu liefern.

## Claims

1. An acoustic treatment grid (22) intended to be mounted inside or at the outlet of a duct (21) of a bleed valve (20) of a turbomachine (1) of an aircraft intended to convey a gas flow (F), the grid (22) comprising a perforated plate (23) and circular holes (230) traversing the perforated plate (23) along a first direction (D_{A}), the holes (230) having a diameter (D) and a geometrical center (C), the perforated plate (23) comprising, with respect to the gas flow (F) intended to traverse the perforated plate (23), an upstream face (232) intended to receive the gas flow (F) and a downstream face (234), opposite the upstream face (232), from which the gas flow (F) is intended to escape,
the grid (22) being **characterized in that** each hole (230) is separated from an adjacent orifice by a space, the length (e) of which is equal to the product of the diameter (D) of said hole (230) and a spacing coefficient of a value between 1.1 and 6 to minimize low-frequency noise, while ensuring the operability of the bleed valve (20), the length (e) separating two holes (230) being measured between the geometrical centers (C) of the two holes (230), and the grid (22) further comprising a layer of porous material (24) disposed on said downstream face (234) of the perforated plate (23) without covering the holes (230), the plate (23) and the layer of porous material (24) forming channels.

2. The grid (22) as claimed in claim 1, wherein the diameter (D) of the orifices (230) of the perforated plate (23) is preferably between 0.5 mm and 20 mm.

3. The grid (22) as claimed in one of claims 1 or 2, wherein the perforated plate (23) has a thickness (h) along the first direction (DA) between 1 mm and 20 mm.

4. The grid (22) as claimed in one of claims 1 to 3, wherein the layer of porous material (24) disposed on said downstream face (234) of the perforated plate (23) includes a thickness (he) along the first direction (D_{A}) between a first thickness equal to half the diameter (D) of a hole (230) around which the layer of porous material (24) is disposed and a second thickness equal to twenty times the greatest length of the perforated plate (23) measured in a plane orthogonal to the first direction (D_{A}).

5. The grid (22) as claimed in one of claims 1 to 4, wherein the perforated plate (23) comprises between 2 and 500 holes (230).

6. The grid (22) as claimed in one of claims 1 to 5, wherein the holes (230) are uniformly distributed over the perforated plate (23).

7. The grid (22) as claimed in one of claims 1 to 6, wherein the perforated plate (23) comprises at least a first orifice with a first diameter and at least a second orifice with a second diameter separate from the first diameter.

8. A bleed valve (20) for an aircraft turbojet engine (1) comprising a duct (21) intended to convey a gas flow (F) mainly along a first direction (D_{A}) from at least one inlet (211) of the duct (21) to at least one outlet (212, 213) of the duct (21), and at least one grid (22) as claimed in one of claims 1 to 7 mounted inside the duct (21) or on an outlet (212, 213) of the duct (21).

9. The bleed valve (20) as claimed in claim 8, wherein the duct (21) comprises at least one wall equipped with an acoustic treatment means (25) and located downstream of the bleed grid (22) with respect to the direction of flow of the gas flow (F) intended to be conveyed through the duct (21).

10. The bleed valve (20) as claimed in claim 9, wherein the acoustic treatment means (25) of said at least one wall comprises a layer of porous material and/or an acoustic treatment panel.

11. The bleed valve (20) as claimed in one of claims 9 or 10, wherein the shortest distance (Sm) between the acoustic treatment means (25) and the grid (22) is less than or equal to a length equal to forty times the greatest length of the section of the duct (21), the section of the duct extending orthogonally to the first direction (D_{A}).

12. The bleed valve (20) as claimed in one of claims 9 to 11, wherein the length (Lm) along the first direction (D_{A}) of the acoustic treatment means (25) is between a first length equal to half the greatest length of the section of the duct (21) and a second length equal to fifty times the greatest length of the section of the duct (21), the section of the duct extending orthogonally to the first direction (D_{A}).

13. The bleed valve (20) as claimed in one of claims 9 to 12, wherein the thickness (hm) along a direction (D_{R}) orthogonal to the first direction (D_{A}) of the acoustic treatment means (25) is between a first thickness equal to half the diameter of an orifice (D) of the perforated plate (23) and a second thickness equal to twenty times the greatest length of the section of the duct (21), the section of the duct extending orthogonally to the first direction (D_{A}).

14. The bleed valve (20) as claimed in one of claims 8 to 13, wherein the duct (21) comprises at least one segment, the diameter of which varies along the first direction (D_{A}).

15. The bleed valve (20) as claimed in one of claims 8 to 14, wherein the duct (21) comprises at least one segment (215, 216, 217) in which the geometrical shape of the section of the duct (21) varies, the section of the duct extending orthogonally to the first direction (D_{A}).

16. The bleed valve (20) as claimed in one of claims 8 to 15, wherein the conduit (21) comprises at least two outlets (212, 213), at least a fork (214), at least a first segment (215) extending between the inlet (211) of the duct (21) and a fork (214), a second segment (216) extending between a fork (214) and a first outlet (212), a third segment (217) extending between a fork (214) and a second outlet (213), at least one of said at least one grid (22) being mounted in one of the first, second or third segment (215, 216, 217), or on one of the first or second outlets (212, 213).

17. The bleed valve (20) as claimed in one of claims 8 to 16, wherein said at least one grid (22) and/or said at least one acoustic treatment means (25) are made of ceramic material.

18. A turbojet engine (1) comprising a nacelle (2), an intermediate casing (3) and an inner casing (4), coaxial, and a bleed valve (20) as claimed in one of claims 8 to 17, the intermediate casing (3) and the inner casing (4) together delimiting a primary fluid flow path (7), the nacelle (2) and the intermediate casing (3) together delimiting a secondary fluid flow path (8), and the bleed valve (20) being mounted between the primary flow path (7) and the secondary flow path (8) and configured to draw a portion of the air from the primary flow path (7) and deliver it into the secondary air path (8).

19. A turbojet engine (1) comprising a nacelle (2), an intermediate casing (3) and an inner casing (4), coaxial, and a bleed valve (20) as claimed in one of claims 8 to 17, the intermediate casing (3) and the inner casing (4) together delimiting a primary fluid flow path (7) in which is mounted a combustion chamber (13) , the nacelle (2) and the intermediate casing (3) together delimiting a secondary fluid flow path (8), and the bleed valve (20) being configured to draw a portion of the air from the primary flow path (7) upstream of the combustion chamber (13) and deliver it into the primary flow path (7) downstream of the combustion chamber (13).
